# EUROPÄISCHE PATENTANMELDUNG

(11) **EP 1 640 688 A1**
(43) Veröffentlichungstag der Anmeldung: **29.03.2006**
(21) Anmeldenummer: 04022762.1
(22) Anmeldetag: 24.09.2004
(51) Int. Cl.: G01B 11/00

(54) **Verfahren und Vorrichtung zur 3-dimensionalen Vermessung der Oberfläche eines Gegenstands**

(71) Anmelder: Maierhofer, Konrad, 83365 Nussdorf (DE)
(72) Erfinder: Maierhofer, Konrad, 83365 Nussdorf (DE)
(74) Vertreter: Grättinger & Partner (GbR)

(57) **Zusammenfassung**

Bei einem Verfahren zur 3-dimensionalen Vermessung der Oberfläche eines Gegenstands wird der Gegenstand mittels mindestens einer in zwei Richtungen verschwenkbaren CCD-Kamera (3, 30), die eine optische Zoomfunktion aufweist, mit einer ersten Brennweite 2-dimensional abgebildet und auf der Oberfläche des Gegenstands mindestens ein zu vermessender Punkt (P1, P2) ausgewählt, auf den ein Laserstrahl (L) gerichtet wird. Die optische Achse der mindestens einen CCD-Kamera (3, 30) wird in einem Zoom-Modus mit einer erhöhten Brennweite auf den durch den Laserstrahl erzeugten Lichtfleck ausgerichtet. Die Koordinaten des ausgewählten Punktes werden ermittelt unter Verwendung der durch entsprechende Drehgeber ermittelten Richtungsvektoren des Laserstrahls und der optischen Achse einer CCD-Kamera oder aber der Richtungsvektoren der optischen Achsen von zwei auf den Lichtfleck ausgerichteten CCD-Kameras.

## Beschreibung

Die vorliegende Erfindung betrifft ein Verfahren zur 3-dimensionalen Vermessung der Oberfläche eines Gegenstands sowie eine zur Durchführung dieses Verfahrens geeignete Vorrichtung.

Die Vermessung der 3-dimensionalen Struktur von Bauteilen bzw. sonstigen Gegenständen ist in verschiedensten industriellen Anwendungen häufig von großer Bedeutung.

Bei vielen industriellen Produktionsvorgängen werden beispielsweise die produzierten Bauteile im Sinne einer Qualitätskontrolle auf ihre räumliche Ausdehnung hin untersucht oder im Hinblick auf weitere Bearbeitungs- bzw. Verwendungsschritte lagerichtig in einer Form oder einem sonstigen Koordinatensystem plaziert. Bei vielen der vorgenannten Anwendungen ist zudem eine hohe Präzision bei der Ausrichtung des betreffenden Gegenstands oder der Markierung von bestimmten Stellen auf dem Bauteil von Bedeutung. Als nicht beschränkende Anwendungsbeispiele können hierfür genannt werden: Das Ausrichten von Glasfaser- oder Kohlefasermatten in einer Produktionsform im Flugzeug oder Fahrzeugbau, das Ablegen von harzgetränkten Glasfasermatten und Aluminiumblechzuschnitten im Flugzeugbau, das Befestigen von Anbauteilen an Schiffs- oder Flugzeugrümpfen oder in Kabinen, die Markierung von an einem Bauteil vorgesehenen Bohrungen oder Schnitten, die lagerichtige Positionierung von Anschweißteilen, Einbauteilen oder Schalungen für Betonfertigteile, die Anordnung der Träger von Fachwerkkonstruktionen oder sonstigen Holzkonstruktionen für Dächer und vieles mehr.

Zu vorgenannten Zwecken wird neben den gebräuchlichen manuellen Methoden, wie beispielsweise dem Spannen von Richtschnüren an Anrissen auf der Form, dem Messen mit Maßbändern und dem Verwenden von Schablonen, bereits erfolgreich die Laserprojektion zur Markierung entsprechender Stellen in einer Form oder auf einem Bauteil bzw. Gegenstand eingesetzt. Dabei wird mittels eines Laserprojektors ein bestimmtes Muster, das ggfs. nur aus einzelnen Punkten besteht, auf die Form für den Gegenstand oder auf die Oberfläche des Gegenstands projiziert, wodurch gewissermaßen eine "Schablone aus Licht" entsteht.

Auch hier ist es jedoch zumeist unerläßlich, bereits vor der Laserprojektion eine möglichst genaue Information über die 3-dimensionale Form der Oberfläche des Gegenstands oder auch nur einzelner Punkte hiervon, sowie über dessen Lage relativ zu dem Laserprojektor zu haben. Als wenig problematisch erweist sich dies, wenn es sich bei den Gegenständen um solche handelt, deren 3-dimensionale Ausdehnungen aufgrund eines sehr präzisen Herstellungsvorgangs bereits bekannt sind. Deren relative Position und Ausrichtung zum Laserprojektor kann dann beispielsweise durch eine entsprechend genaue den Gegenstand aufnehmende Tragstruktur vorgegeben werden, womit alle Informationen für eine lagerichtige Markierung von bestimmten Punkten oder Bereichen mit einem von dem Laserprojektor zu erzeugenden Muster zur Verfügung stehen. Im Falle von CNC-bearbeiteten Bauteilen kann beispielsweise die die Form des Bauteils exakt beschreibende Information direkt aus den für die CNC-Bearbeitung erzeugten CAD-Daten entnommen werden. Unter Berücksichtigung eines z.B. durch eine den Gegenstand aufnehmende Tragstruktur vorgegebenen Bezugskoordinatensystems kann dann mit einem Laserprojektor das gewünschte Muster auf das Bauteil oder die für das Bauteil vorgesehene Tragstruktur projiziert werden.

Bei vielen Anwendungen hingegen existieren keine derartigen CAD-Daten des betreffenden Gegenstands oder der Tragstruktur für einen Gegenstand oder die genaue Raumform des Gegenstands ist aufgrund eines manuellen Herstellungsvorgangs oder sonstiger Gründe nicht hinreichend genau bekannt. Eine entsprechende Laserprojektion kann dann entweder gar nicht oder evtl. nicht im Rahmen einer notwendigen Genauigkeit stattfinden. Auch hierfür existiert somit ein Bedarf für ein System zur möglichst präzisen Vermessung der 3-dimensionalen Oberfläche von Gegenständen, wobei im speziellen z.B. auch die vorherige Vermessung einer Tragstruktur für einen Gegenstand, die auch z.B. aus der Oberfläche eines Arbeitstisches bestehen kann, und die spätere Projektion eines Musters auf die Oberfläche dieser Tragstruktur als Anwendungsbeispiel genannt werden kann.

Zur 3-dimensionalen Vermessung von Gegenständen sind bereits verschiedenste Meßverfahren und Vorrichtungen bekannt. Darunter fallen z.B. sogenannte Koordinaten Meßmaschinen (CMM), Photogrammetrie bzw. Stereophotogrammetrie, Theodolithen oder sonstige räumliche Meßverfahren, die z.B. auf Triangulation, Laserradar, Meßarmen, Laserinterferometrie oder Kombinationen der vorgenannten Verfahren bzw. Vorrichtungen beruhen.

Die im Stand der Technik bekannten Verfahren bzw. Vorrichtungen erweisen sich jedoch häufig als für die entsprechende Anwendung zu teuer oder als nicht zweckmäßig, da es mit ihnen nicht gelingt, einen der Anwendung entsprechenden Kompromiß zwischen der Meßgenauigkeit des Verfahrens, den Anschaffungs- und Unterhaltskosten der zugehörigen Vorrichtung, der Zuverlässigkeit des Systems, den möglichen Einsatzzwecken der Vorrichtung sowie deren Benutzerfreundlichkeit zu finden.

Ein erstes auf Triangulation beruhendes Verfahren zur 3-dimensionalen Vermessung einer Oberfläche wird beispielsweise in der US 5661667 A beschrieben. Dabei werden zwei aus verschiedenen Richtungen auf die Oberfläche eines Objekts gerichtete Laserstrahlen auf einem an der Meßstelle anzubringenden Reflektor zur Deckung gebracht. In Kenntnis der Positionen beider Laserprojektoren relativ zu einem vorgegebenen Koordinatensystem lassen sich sodann aus den bestimmbaren Richtungsvektoren der beiden Laserstrahlen die 3-dimensionalen Koordinaten des auf der Oberfläche angeordneten Reflektors berechnen.

Eine weitere Vorrichtung, die eine Bestimmung der 3-dimensionalen Koordinaten von Punkten auf der Oberfläche eines Bauteils ermöglicht, ist in der US 5615013 A beschrieben. Dort wird ein von einem Laserprojektor erzeugter Laserstrahl auf die Oberfläche eines Bauteils gerichtet und der dort erzeugte Lichtfleck über ein zwei verschwenkbaren Spiegel umfassendes Spiegelsystem in einem Kamerasystem abgebildet. Aus der relativen Anordnung der Systemkomponenten, dem Richtungsvektor des Laserstrahls und die jeweilige Auslenkung der Spiegel des Spiegelsystems kann dann wiederum auf die genaue Position des Lichtpunktes auf der Bauteiloberfläche geschlossen werden.

Schließlich beschreibt noch die DE 4334060 A1 ein Verfahren und eine Vorrichtung zur Bestimmung eines Lageparameters einer Meßstelle. Dabei wird ein an der Meßstelle diffus gestreuter Laserstrahl in dem als Referenzpunkt anzusehenden Zentrum eines Photodetektors, z.B. einer Pin-Photodiode oder Quadrantendiode, detektiert, wobei zur Messung von Auslenkungen der Meßstelle ein Regelmechanismus zur linearen Nachführung des Senders und des Fotodetektors vorgesehen ist.

Ausgehend vom vorbekannten Stand der Technik und von den vorstehenden Überlegungen ist es somit die Aufgabe der vorliegenden Erfindung, ein Verfahren sowie eine zur Durchführung dieses Verfahrens geeignete Vorrichtung zur 3-dimensionalen Vermessung der Oberfläche von Gegenständen bereitzustellen, das bzw. die sich bei möglichst hoher Meßgenauigkeit als möglichst vielseitig einsetzbar und kostengünstig erweist.

Diese Aufgabe wird durch zwei auf dem selben Erfindungsgedanken beruhenden Verfahren zur 3-dimensionalen Vermessung der Oberfläche eines Gegenstands gemäß den Patentansprüchen 1 und 2 gelöst. Dabei beschreibt Anspruch 1 ein gattungsgemäßes Verfahren, umfassend die folgenden Schritte A1) bis H1):
- A1): 2-dimensionales Abbilden des Gegenstands mittels einer in zwei Richtungen verschwenkbaren CCD-Kamera, die eine optische Zoomfunktion aufweist, mit einer ersten Brennweite
- B1): Auswählen mindestens eines zu vermessenden Punktes auf der Oberfläche des Gegenstands
- C1): Bestimmen des Richtungsvektors eines mit seinem Zentrum auf einen zu vermessenden Punkt der Oberfläche des Gegenstands gerichteten Laserstrahls
- D1): Erkennen des durch den Laserstrahl auf der Oberfläche des Gegenstands erzeugten Lichtflecks mittels der CCD-Kamera
- E1): Ausrichten der optischen Achse der CCD-Kamera auf das Zentrum des auf der Oberfläche des Gegenstands erzeugten Lichtflecks bei einer zweiten, im Vergleich zu der unter Schritt A1) verwendeten größeren Brennweite
- F1): Bestimmen des Richtungsvektors der optischen Achse der CCD-Kamera
- G1): Berechnen der innerhalb eines Bezugskoordinatensystems geltenden 3-dimensionalen Koordinaten des durch das Zentrum des Lichtflecks markierten Punktes auf der Oberfläche des Gegenstands aus den beiden Richtungsvektoren des Laserstrahls und der optischen Achse der CCD-Kamera unter Berücksichtigung der relativen Anordnung von CCD-Kamera und Laserprojektor
- H1): Wiederholung der Schritte C1) bis G1) für alle unter Schritt B1) ausgewählten Punkte.

Das zweite erfindungsgemäße Verfahren umfaßt die folgenden Schritte A2) bis H2):
- A2): 2-dimensionales Abbilden des Gegenstands mittels zwei jeweils in zwei Richtungen verschwenkbaren CCD-Kameras, die beide eine optische Zoomfunktion aufweisen, bei jeweils einer ersten Brennweite
- B2): Auswählen mindestens eines zu vermessenden Punktes auf der Oberfläche des Gegenstands
- C2): Ausrichten eines Laserstrahls mit seinem Zentrum auf einen zu vermessenden Punkt der Oberfläche des Gegenstands
- D2): Erkennen des durch den Laserstrahl auf der Oberfläche des Gegenstands erzeugten Lichtflecks mittels beider CCD-Kameras
- E2): Ausrichten der optischen Achse beider CCD-Kamera aufs das Zentrum des auf der Oberfläche des Gegenstands erzeugten Lichtflecks bei jeweils einer zweiten, im Vergleich zur der unter Schritt A2) verwendeten größeren Brennweite
- F2): Bestimmen der Richtungsvektoren der optischen Achsen der beiden CCD-Kameras
- G2): Berechnen der innerhalb eines Bezugskoordinatensystems geltenden 3-dimensionalen Koordinaten des durch das Zentrum des Lichtflecks markierten Punktes auf der Oberfläche des Gegenstands aus den beiden Richtungsvektoren der optischen Achsen der CCD-Kameras unter Berücksichtigung der relativen Anordnung der beiden CCD-Kameras
- H2): Wiederholung der Schritte C2) bis G2) für alle unter Schritt B2) ausgewählten Punkte

Der Unterschied beider Verfahren liegt dabei im wesentlichen darin begründet, daß zur Vermessung der Koordinaten eines von einem Laserprojektor auf die Gegenstandsoberfläche projizierten Lichtflecks im ersten Fall der Richtungsvektor des von dem Laserprojektor ausgesandtem Laserstrahls zusammen mit dem Richtungsvektor der optischen Achse einer auf den Lichtfleck exakt ausgerichteten CCD-Kamera herangezogen wird, während im zweiten Fall der Laserprojektor lediglich zur Projektion eines Lichtflecks auf die Gegenstandsoberfläche verwendet wird und dort zur Vermessung der Koordinaten des Lichtflecks die beiden Richtungsvektoren zweier exakt auf den Lichtfleck ausgerichteten CCD-Kameras herangezogen werden.

Bei beiden vorgenannten Verfahren erweist sich bereits die in den vorgenannten Dokumenten nicht vorhandene Möglichkeit, zunächst das gesamte Bauteil mit mindestens einer CCD-Kamera bei einer ersten Brennweite 2-dimensional abzulichten als äußerst vorteilhaft. Die 2-dimensionale Abbildung des zu vermessenden Gegenstands kann dann später vorteilhaft zur Auswahl der mit Hilfe des Laserprojektors genauer zu vermessenden Punkte dienen, wobei diese Abbildung(en) auch vorteilhaft zu Dokumentationszwecken in einer Datenverarbeitungsanlage bzw. einem Computersystem gespeichert werden kann.

Ein weiterer großer Vorteil besteht in der Bereitstellung und Verwendung der mindestens einen mit einem variablen optischen Zoom ausgerüsteten CCD-Kamera. Dies ermöglicht erst die mindestens zweistufige Durchführung der beiden unabhängigen Verfahren, bei der in einer ersten Stufe eine erste Brennweite zur Abbildung des Gegenstands (z.B. in einer Weitwinkelaufnahme) eingestellt wird und später in einer zweiten Stufe eine zweite und größere Brennweite zur Vermessung des Gegenstands mit hoher Meßgenauigkeit dient. Dadurch läßt sich zudem die Meßgenauigkeit bei der Erkennung des Lichtflecks mit der CCD-Kamera variabel den jeweiligen Gegebenheiten (z.B. der Größe des Lichtflecks des diffus an der Gegenstandsoberfläche gestreuten Laserstrahls oder dem jeweiligen Abstand der CCD-Kamera zum Gegenstand) mit Hilfe des optischen Zooms anpassen. Insbesondere können somit auch in ihrer räumlichen Ausdehnung verschiedenartige Bauteile vermessen werden, indem das optische Zoom auf die jeweiligen Gegebenheiten angepaßt werden kann.

Insbesondere kann auch bei der Vermessung verschiedener Meßpunkte eines Bauteils vorteilhaft vorgesehen sein, daß die zweite Brennweite für jeden zu vermessenden Punkt separat einstellbar ist bzw. eingestellt wird. Dies kann z.B. der Anpassung der auf dem CCD-Chip der Kamera abgebildeten Lichtfleckgröße dienen, die ansonsten bei gleicher Brennweite in Abhängigkeit von dem jeweiligen Streu- bzw. Reflexionsvermögen der Meßstelle und dem jeweiligen Abstand der CCD-Kamera zu dem Meßpunkt variieren würde.

Insbesondere kann bei den erfindungsgemäßen Verfahren, nicht zuletzt auch aufgrund der Verwendung eines variablen optischen Zooms, auf eine Verwendung von Retroreflektoren auf der Oberfläche eines Gegenstands verzichtet werden. Außerdem können somit auch Gegenstände unterschiedlichen Reflexionsvermögens vermessen werden, indem eine verschiedene Größe des durch diffuse Streuung des Laserstrahls an der jeweiligen Gegenstandsoberfläche entstehenden Lichtflecks durch eine Variation des optischen Zooms ausgeglichen werden kann. Die erfindungsgemäßen Verfahren erweisen sich damit als gegenüber dem bekannten Stand der Technik vielseitiger einsetzbar.

Darüber hinaus kann als weiterer Vorteil des erfindungsgemäßen Verfahrens angeführt werden, daß die Meßgenauigkeit des zur Durchführung des Verfahrens geeigneten Systems in Verbindung mit dem optischen Zoom maßgeblich von der besonders präzise möglichen Bestimmung des Richtungsvektors der auf den Lichtfleck gerichteten optischen Achse der Kamera vorgegeben wird. Dies gilt insbesondere für das zweite erfindungsgemäße Verfahren, bei dem zur Berechnung der Koordinaten die Richtungsvektoren der zwei auf den Lichtfleck ausgerichteten CCD-Kameras herangezogen werden. Im Falle des ersten Verfahrens, bei dem nur eine CCD-Kamera zum Einsatz kommt, gilt dies jedoch in gleicher Weise bei einer entsprechenden Ansteuergenauigkeit des Laserprojektors. Diese ergibt sich direkt durch die Ausführung der beiden Antriebseinheiten der verschwenkbaren CCD-Kamera(s) bzw. der zugehörigen Einrichtung(en) zur Bestimmung des Richtungsvektors der optischen Achse der CCD-Kamera, auf die weiter unten in der Erläuterung der Vorrichtung näher eingegangen werden wird.

Zudem erlaubt das vorhandene optische Zoom in vorteilhafter Weise eine vergleichsweise hohe Automation des erfindungsgemäßen Verfahrens, indem z.B. die Position eines durch die Reflexion/Streuung des Laserstrahls erzeugten Lichtflecks auf der Oberfläche zunächst bei einer geringeren Brennweite automatisch erkannt werden kann und durch anschließende Nachführung der optischen Achse der CCD-Kamera(s) in Verbindung mit einer (evtl. sukzessiven) Erhöhung der Brennweite für eine optimale Abbildung des Lichtflecks auf dem CCD-Chip der jeweiligen CCD-Kamera gesorgt werden kann. Unter einer optimalen Abbildung in diesem Sinne ist dabei vorteilhaft die Abbildung des Lichtflecks in einer bestimmten Größe im Durchstoßpunkt der optischen Achse durch den CCD-Chip zu verstehen, mit der für eine ausreichend gute Erkennung des Lichtflecks sowie seine Zentrierung gesorgt werden kann. Unter der Ausrichtung der optischen Achse einer CCD-Kamera auf das Zentrum des Lichtflecks ist dabei eine Ausrichtung der CCD-Kamera zu verstehen, bei der das Zentrum des Lichtflecks auf das auf dem Durchstoßpunkt der optischen Achse angeordnete Pixel oder mehrere für diesen Zweck um den Durchstoßpunkt der optischen Achse herum angeordnete Pixel des CCD-Chips der CCD-Kamera abgebildet wird, das bzw. die vorteilhaft exakt das Zentrum des Chips bilden.

Das Zentrum des Lichtflecks kann dabei automatisch aus der räumlichen Verteilung des Lichtflecks auf dem CCD-Chip bestimmt werden, wobei insbesondere auch vorgesehen sein kann, daß hierzu das einer bestimmten Verteilungsfunktion folgende Intensitätsprofil des Lichtflecks herangezogen wird. Im Falle einer starken geometrischen Abweichung des Lichtflecks von einem runden, elliptischen oder zumindest symmetrischen Querschnitt kann vorgesehen werden, daß die jeweilige Bestimmung des Zentrums eines Lichtflecks auch manuell, z.B. auf einer an einem Bildschirm eines Datenverarbeitungssystem dargestellten Abbildung des von der jeweiligen CCD-Kamera beobachteten Ausschnitts der Bauteiloberfläche, erfolgen kann. Dies erweist sich insbesondere auch dann als vorteilhaft, wenn z.B. durch eine stufenhafte Unstetigkeit der Oberfläche gleich zwei jeweils durch einen Teilstrahl hervorgerufene Lichtflecke durch einen Laserstrahl abgebildet werden. In diesem Fall könnte vorteilhaft auch eine den Anwender auf diesen Sachverhalt hinweisende Fehlermeldung vorgesehen sein, die ihn z.B. dazu auffordert, einen neuen Meßpunkt festzulegen, an dem das Zentrum eines Lichtflecks wieder automatisch bestimmbar ist.

Die in dem erfindungsgemäßen Verfahren vorgesehene Nachführung der optischen Achse der CCD-Kamera(s) auf das Zentrum des Lichtflecks führt in Verbindung mit dem variablen optischen Zoom zu einem weiteren großen Vorteil des Verfahrens bzw. der zugehörigen Vorrichtung. Dieser liegt darin, daß damit sowohl an die Güte als auch an die Auflösung der verwendeten Kamera(s) keine besonders hohen Anforderungen gestellt werden müssen, da, wie zuvor bereits angemerkt, die Meßgenauigkeit des Systems maßgeblich von der Positionierungsgenauigkeit der CCD-Kamera(s) bzw. der Auslesegenauigkeit für den jeweiligen Richtungsvektor der optischen Achse einer CCD-Kamera vorgegeben wird. Im vorliegenden Fall kann daher z.B. bereits mit CCD-Kameras mit der herkömmlichen Auflösung des PAL- oder NTSC-Fernsehstandards (bis zu 768x567 bzw. 640x480 Pixel) gearbeitet werden, die einerseits noch ein in seiner Qualität akzeptables Gesamtbild des Bauteils gemäß Schritt A1) oder A2) ermöglichen, jedoch andererseits zur Erkennung des Lichtflecks auf der Oberfläche bei der größeren Brennweite vollkommen ausreichen. Dies erweist sich insbesondere im Hinblick auf die Anschaffungs- bzw. Herstellungskosten für die für dieses Verfahren geeignete Vorrichtung als äußerst günstig, da derartige Kameras, insbesondere auch mit einer Zoomfunktion zu vergleichsweise günstigen Preisen herzustellen bzw. zu erwerben sind. Bei anderen im Stand der Technik gebräuchlichen Verfahren ist die Meßgenauigkeit des zugehörigen Systems hingegen häufig direkt von der Auflösung eines verwendeten Kamerasystems abhängig.

Gemäß einer ersten vorteilhaften Ausgestaltung der erfindungsgemäßen Verfahren kann vorgesehen sein, daß die in Schritt A1) oder A2) zu erzeugende(n) Abbildung(en) mit Hilfe eines Computersystems aus mehreren, vorzugsweise weniger als zehn, jeweils nur einen Teil des Gegenstands darstellenden Einzelaufnahmen der CCD-Kamera zusammengesetzt wird bzw. werden. Dies erweist sich insbesondere dann als vorteilhaft, wenn es sich bei dem erfindungsgemäßen Gegenstand um einen solchen mit einer großen räumlichen Ausdehnung von z.B. mehreren Metern in jede Richtung handelt. Damit kann einerseits wieder, auch trotz Verwendung einer geringauflösenden Kamera, eine 2-dimensionale Abbildung des Gegenstands ausreichender Güte erzeugt werden. Andererseits kann dies auch dann sinnvoll sein, wenn eine verwendete CCD-Kamera mit ihrer geringsten Brennweite nicht den gesamten Gegenstand ablichten kann und zu diesem Zweck mehrere Aufnahmen notwendig werden. Die Zusammensetzung der Einzelaufnahmen erfolgt dabei vorzugsweise automatisch durch das angeschlossene Computersystem.

Außerdem kann vorgesehen sein, daß die in Schritt B1) oder B2 beschriebene Auswahl der zu vermessenden Punkte durch Ausrichten des Laserstrahls des Laserprojektors auf den jeweiligen zu vermessenden Punkt erfolgt. Vorteilhaft erfolgt dabei die Steuerung des Laserprojektors mittels des Computersystems, wobei weiterhin vorteilhaft der auf die Oberfläche des Gegenstands gerichtete Laserstrahl mittels der von einer CCD-Kamera dargestellten Abbildung des Gegenstands, vorzugsweise in Echtzeit, beobachtet und über ein an das Computersystem angeschlossenes Eingabegerät, wie z.B. Tastatur, Maus, Joystick, etc., gesteuert werden kann.

In einer weiteren vorteilhaften Ausgestaltung der erfindungsgemäßen Verfahren ist vorgesehen, daß die in Schritt B1) oder B2) beschriebene Auswahl automatisch durch ein Computersystem erfolgt. Dies erweist sich insbesondere zur Qualitätskontrolle von in ihren Abmessungen weitgehend bekannten Gegenständen, die in einer entsprechenden Aufnahme gehalten werden als vorteilhaft. Dabei kann insbesondere vorgesehen sein, daß im Sinne von Stichproben verschiedenste Punkte oder Profile auf der Bauteiloberfläche zufällig ausgewählt werden, oder daß für jedes Bauteile eine gewisse Anzahl von vorgegebenen Punkten automatisch von dem Computersystem ausgewählt werden.

Außerdem kann in einer nochmals vorteilhaften Ausführung der erfindungsgemäßen Verfahren vorgesehen sein, daß die in Schritt B1) oder B2) auszuwählenden Punkte ein automatisch erzeugtes Raster innerhalb eines vom Nutzer auswählbaren Bereichs der Oberfläche des Gegenstands bilden. Dies kann beispielsweise realisiert werden, indem der Nutzer zunächst den Laserstrahl des Laserprojektors auf vier, die Eckpunkte eines Bereichs bildende Stellen der Bauteiloberfläche steuert und damit den von ihm auszuwählenden Bereich begrenzt. Die gewünschte Auflösung des vom Computer in diesem Bereich zu erzeugenden Rasters kann dann ebenfalls vom Nutzer vorgegeben werden bzw. in Abhängigkeit von der speziellen Anwendung und gewünschten Auflösung bereits im Computersystem voreingestellt sein.

In einer nochmals vorteilhaften Ausgestaltung der erfindungsgemäßen Verfahren erfolgt die in Schritt D1) oder D2) beschriebene automatische Erkennung des Lichtflecks auf der Oberfläche des Gegenstands mittels eines Differenzbildes, das aus zwei, einmal mit eingeschaltetem Laserstrahl und einmal mit ausgeschaltetem Laserstrahl aufgenommenen Einzelaufnahmen einer CCD-Kamera berechnet wird. Bei ansonsten gleichbleibender Beleuchtung ist der von dem Laserstrahl erzeugte Lichtfleck dann auf dem derartigen Differenzbild direkt, bei entsprechender Programmierung auch leicht durch das Computersystem erkennbar. Andere Verfahren, wie beispielsweise die Erkennung des Lichtflecks an seiner Farbe, d.h. an der für den Laserprojektor charakteristischen Wellenlänge des ausgesandten Laserstrahls, wären ebenso denkbar, wobei insbesondere auch eine Kombination mit der vorgenannten Differenzbildberechnung vorteilhaft erscheint.

Vorteilhaft weist ein erfindungsgemäße Verfahren bei der Bestimmung des Richtungsvektors des Laserstrahls nach Schritt C1) oder C2), bei der Bestimmung des Richtungsvektors der optischen Achse der CCD-Kamera nach Schritt F1) oder F2) und/oder bei der Berechnung der Koordinaten eines Punkts auf der Oberfläche des Gegenstands nach Schritt G1) oder G2) eine Softwarekompensation zur Eliminierung von bekannten Meßabweichungen auf. Solche Meßabweichungen können beispielsweise bekannte Abbildungsfehler der Optik, bekannte Ungenauigkeiten der beiden Einrichtungen für die Bestimmung der exakten Richtungsvektoren von einfallendem Laserstrahl und optischer Achse der CCD-Kamera, Pixelfehler des CCD-Chips der CCD-Kamera oder sonstige bekannte gleichbleibende Meßabweichungen sein, die vorteilhaft in einem entsprechenden Eichvorgang der Vorrichtung bestimmt werden.

Außerdem ist es äußerst vorteilhaft, wenn nach dem 3-dimensionalen Vermessen der ausgewählten Punkte der Oberfläche des Gegenstands mit dem Laserprojektor in einem weiteren Verfahrensschritt ein vorgebbares Muster, z.B. als optische Schablone für darin anzuordnende Gegenstände, auf die Oberfläche des Gegenstands projiziert werden kann. Damit erweisen sich die beiden erfindungsgemäßen Verfahren und eine erfindungsgemäß zur Durchführung eines dieser Verfahren geeignete Vorrichtung als äußerst vielseitig und flexibel, indem mit einer Vorrichtung mit nur einem Laserprojektor sowohl eine Vermessung der Oberfläche eines Gegenstands als auch die spätere Markierung von bestimmten Punkten bzw. Mustern mittels des Laserstrahls auf der Oberfläche des Gegenstands ermöglicht wird. Darüber hinaus kann vorteilhaft vorgesehen sein, daß entsprechende auf die Oberfläche zu projizierende Muster in einer unter Schritt A1) oder A2) erstellten Aufnahme des Gegenstands mit Hilfe des Computersystems ausgewählt bzw. dort eingezeichnet werden können.

Weiterhin ist es vorteilhaft, wenn in einem weiteren Verfahrensschritt aus einer von der CCD-Kamera erzeugten Abbildung des Gegenstands die Orientierung eines bekannten Musters auf der Oberfläche des Gegenstands berechnet wird. Dazu kann je nach Größe des Gegenstands und des Musters entweder eine unter Schritt A1) oder A2) gemachte Abbildung des gesamten Gegenstands oder eine in einem weiteren Verfahrensschritt gemachte Detailaufnahme eines Teils des Gegenstands bzw. Bauteils verwendet werden. Dies erweist sich z.B. bei der Vermessung von Kohlefasermatten bzw. Glasfasermatten als äußerst vorteilhaft, da somit die für eine entsprechende Matte charakteristische Ausrichtung der Fasern, die sich in einem speziellen Muster der Oberfläche zeigt, bestimmbar ist.

Außerdem kann in einem anderen Verfahrensschritt vorteilhafterweise vorgesehen sein, daß aus den Koordinaten der vermessenen Punkte die Anordnung eines in seinen Abmessungen bekannten Gegenstands berechnet wird. Hiermit kann das erfindungsgemäße Verfahren auch zur Bestimmung der Lage und Orientierung eines Gegenstands mit bekannten Ausmaßen eingesetzt werden, indem z.B. die absolute Position von bestimmten Stellen (z.B. Ekken, Kanten, Bohrungen, etc.) der Oberfläche des Gegenstands bestimmt wird, deren Relativkoordinaten beispielsweise aus CAD-Daten des Gegenstands bekannt sind.

Vorteilhaft ist es dann ferner, wenn anschließend die nach einem oder beiden der beiden vorgenannten Verfahrensschritte berechnete Anordnung des Gegenstands oder Ausrichtung eines bestimmten Musters auf der Oberfläche des Gegenstands mit einem vorgebbaren Sollwert verglichen wird. Dadurch kann im Sinne einer Produktions- bzw. Qualitätskontrolle z.B. die orientierungsrichtige Lage von Kohlefasermatten, deren Anordnung häufig in verschiedenen Schichten mit einer bestimmten Abfolge von Orientierungs-Winkeln erfolgt, überprüft bzw. die lagerichtige Position sowie Ausrichtung von bestimmten Bauteilen vor einem weiteren Fertigungsschritt überprüft werden. Dabei erweist es sich außerdem als günstig, wenn eine nicht dem Sollwert oder Sollwertebereich entsprechende Ausrichtung des Gegenstands oder des Musters auf der Oberfläche des Gegenstands durch ein elektrisches, akustisches und/oder optisches Signal signalisiert wird. Im Falle einer fehlerhaften Lage oder Ausrichtung eines bestimmten Gegenstands bzw. Bauteils kann zudem eine Einrichtung oder ein Mechanismus vorgesehen sein, mit es möglich ist z.B. ein Produktionsband zu stoppen.

Als erfindungsgemäß wird, wie bereits zuvor angesprochen, auch eine zur Durchführung eines der beiden vorgenannten Verfahren zur 3-dimensionalen Vermessung der Oberfläche eines Gegenstands geeignete Vorrichtung angesehen, umfassend eine Aufnahme für den Gegenstand, einen Laserprojektor, mindestens eine CCD-Kamera und ein mit den relevanten Vorrichtungskomponenten verbundenes Computersystem zur Erfassung und Auswertung der gewonnenen Daten, wobei der Laserprojektor über eine Einrichtung zur Bestimmung und/oder Steuerung des Richtungsvektors eines von ihm auf die Oberfläche des Gegenstands gerichteten Laserstrahls verfügt und die mindestens eine CCD-Kamera mit einer variabel einstellbaren optischen Zoomfunktion ausgestattet ist, mittels zweier Antriebseinheiten in zwei verschiedenen Richtungen verschwenkbar auf die Oberfläche des Gegenstands ausrichtbar ist und eine Einrichtung zur Bestimmung des Richtungsvektors ihrer optischen Achse aufweist.

Die erfindungsgemäß vorgesehenen Bestandteile der Vorrichtung sowie deren sich vom Stand der Technik vorteilhaft abhebenden Wirkungen wurden bereits in der Beschreibung zu dem erfindungsgemäßen Verfahren hinreichend gewürdigt, so daß auf eine erneute Wiederholung dieser Vorteile an dieser Stelle verzichtet werden kann.

In einer ersten vorteilhaften Ausgestaltung der erfindungsgemäßen Vorrichtung ist vorgesehen, daß die beiden Antriebseinheiten der mindestens einen CCD-Kamera jeweils ein Schneckengetriebe und einen mit der Schnekkenwelle verbundenen Drehgeber aufweisen. Damit wird eine für die vorgesehenen Anwendungsgebiete der Vorrichtung ausreichende und äußerst präzise Verschwenkbarkeit der CCD-Kamera erzielt, wobei die Bestimmung des Richtungsvektors der optischen Achse dann nach einer entsprechenden Eichung des Systems durch ein Auslesen des Drehgebers erfolgt. Vorteilhaft sind beide Schneckengetriebe spielfrei vorgespannt, was die ohnehin schon präzise Ansteuerung der CCD-Kamera nochmals verbessert. Diese Vorspannung der Schneckengetriebe wird dabei in vorteilhafter Weise mittels einer auf das jeweilige Schneckenrad wirkenden Spiralfeder aufgebracht.

Durch geschickte Wahl der Untersetzung des Schneckengetriebes, der Impulszahl des Drehgebers pro Umdrehung sowie des maximal möglichen Schwenkbereichs der CCD-Kamera längs beider Richtungen kann in vorteilhafter Weise sichergestellt werden, daß die Winkelauflösung der Einrichtung zur Bestimmung des Richtungsvektors der optischen Achse der Kamera besser als 10 Winkelsekunden, vorteilhaft besser als 5 Winkelsekunden und nochmals vorteilhaft besser als 3 Winkelsekunden ist. Dabei darf in diesem Zusammenhang nochmals darauf hingewiesen werden, daß diese Genauigkeit bei der Bestimmung des Richtungsvektors der optischen Achse der Kamera maßgeblich zur möglichen Auflösung des Gesamtsystems beiträgt und es dabei nicht, bzw. nur unwesentlich auf die Pixelzahl des CCD-Chips der CCD-Kamera ankommt.

Die vorstehend dargelegte Auflösung läßt sich beispielsweise erreichen, indem bei einem maximal möglichen Schwenkbereich der Kamera von 100° (siehe unten) ein Schneckengetriebe mit einer Untersetzung von 100:1 und ein Drehgeber mit einer Auflösung von 5000 Schritten pro Umdrehung verwendet werden. Damit erreicht man eine Auflösung von (100/360)*100*5000 = 138888 Schritten auf den gesamten Beobachtungsbereich von 100°, was dann einer Winkelauflösung von (100°/138888)*3600 = 2,59 Winkelsekunden entspricht.

Mitentscheidend für die mögliche Meßgenauigkeit der gesamten Vorrichtung ist jedoch ersichtlich auch die Genauigkeit bei der Ansteuerung des Laserprojektors (bzw. bei der Bestimmung des Richtungsvektors des ausgesandten Laserstrahls), weshalb in idealer Weise ein Laserprojektor mit einer Auflösung, die in der Größenordnung der vorstehend genannten Auflösung zur Bestimmung des Richtungsvektors der optischen Achse der CCD-Kamera liegt, gewählt werden sollte.

Die maximal mögliche Brennweite der optischen Zoomfunktion der CCD-Kamera wird dabei vorteilhaft so gewählt, daß sie eine mindestens 10-fache, vorteilhaft eine mindestens 15-fache, nochmals vorteilhaft eine 20-fache Vergrößerung gestattet. Mit diesen maximalen Brennweiten kann eine ausreichende Vergrößerung eines auf der Bauteiloberfläche gestreuten Lichtflecks sichergestellt werden, so daß selbst der Einsatz einer handelsüblichen CCD-Kamera mit einer Auflösung des Fernsehstandards für eine ausreichende Präzision bei der Erkennung des im Zentrum des Chips abgebildeten Lichtflecks sorgt. Ersichtlich ist jedoch insbesondere die maximal mögliche Geschwindigkeit beim Auslesen der Pixel des CCD-Chips von Bedeutung, um einen möglichst schnellen Verfahrensablauf zu gewährleisten. Insofern ist somit auch die erfindungsgemäß mögliche Verwendung von CCD-Kameras mit einer vergleichsweise niedrigen Auflösung von besonderem Vorteil, da naturgemäß eine geringe Anzahl von Pixeln auf dem CCD-Chip schneller ausgelesen werden können als dies bei einer hachauflösenden Kamera der Fall wäre.

Der maximal mögliche Schwenkbereich beider Antriebseinheiten der CCD-Kamera von Anschlag zu Anschlag schließt vorteilhaft einen Winkelbereich von mindestens 80°, nochmals vorteilhaft von 100° ein. Damit kann selbst bei einer Anordnung der Kamera in direkter Umgebung eines Gegenstands infolge des äußerst großen Schwenkbereichs eine für viele gängige Anwendungen ausreichende Abdeckung des Bildbereichs gesorgt werden.

Der Laserprojektor umfaßt vorteilhaft zwei drehbare, magnetisch ansteuerbare Spiegel, die für die Ablenkung des im Laserprojektor erzeugten Laserstrahls auf die Oberfläche des zu vermessenden Gegenstands sorgen.

Nachfolgend wird die Durchführung eines Ausführungsbeispiels des ersten erfindungsgemäßen Verfahrens sowie zwei Ausführungsbeispiele der erfindungsgemäßen Vorrichtung an Hand der Zeichnung näher erläutert. Dabei zeigt
- Fig. 1: ein Flußdiagramm der Durchführung eines Ausführungsbeispiels des erfindungsgemäßen Verfahrens,
- Fig. 2: eine Darstellung eines ersten Ausführungsbeispiels der erfindungsgemäßen Vorrichtung,
- Fig. 3: den Aufbau des Laserprojektors des Ausführungsbeispiels nach Fig. 2,
- Fig. 4: eine Detailansicht der CCD-Kamera des Ausführungsbeispiels nach Fig. 2 in ihrer mit zwei Antriebseinheiten zur Verschwenkung der CCDKamera versehenen Halterung sowie eine weitere detaillierte Darstellung einer der beiden Antriebseinheiten und
- Fig. 5: eine Darstellung eines zweiten Ausführungsbeispiel einer erfindungsgemäßen Vorrichtung.

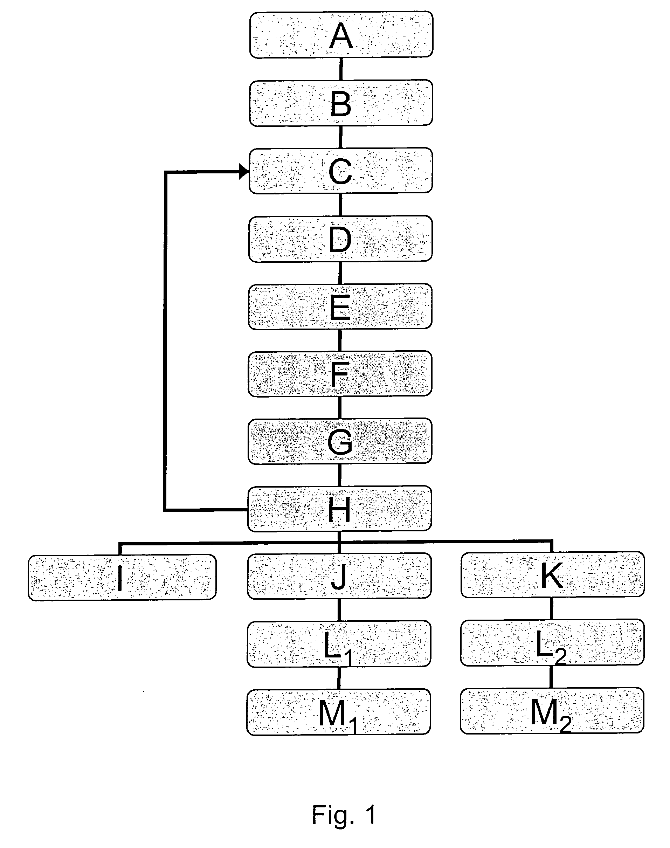

Fig. 1 zeigt ein Flußdiagramm zur Durchführung eines erfindungsgemäßen Verfahrens zur 3-dimensionalen Vermessung der Oberfläche eines Gegenstands, umfassend die Verfahrensschritte A bis M, deren Durchführung weiter unten gemeinsam mit der Erläuterung des Ausführungsbeispiels der Vorrichtung beschrieben wird.

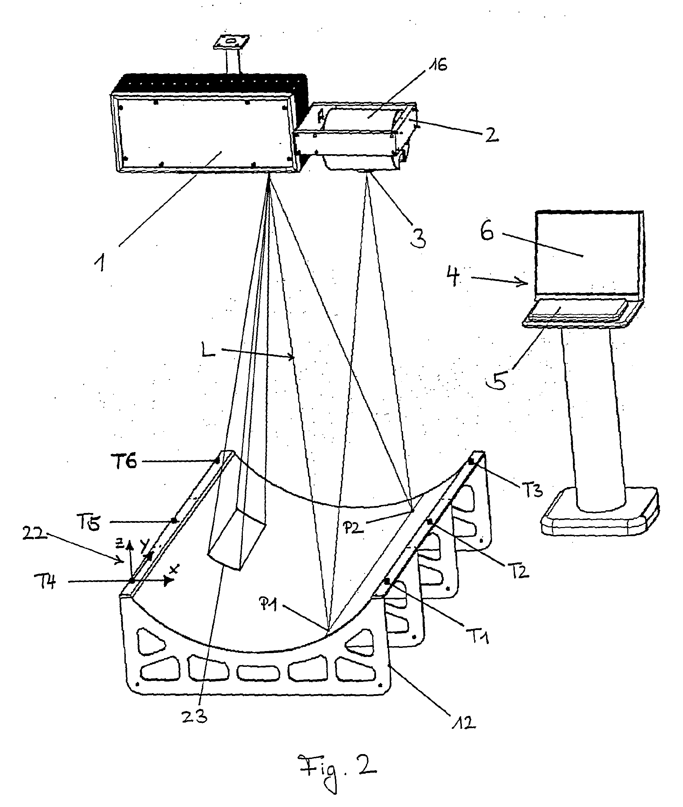

Das in den Fig. 2 bis 4 dargestellte Ausführungsbeispiel einer erfindungsgemäßen Vorrichtung weist einen Laserprojektor 1, eine in einer Halterung 2 in zwei Richtungen verschwenkbar aufgehängte CCD-Kamera 3 und ein Computersystem 4 auf, welches über eine Tastatur 5 als Eingabe- und einen Bildschirm 6 als Ausgabegerät verfügt. Ersichtlich können dabei jedoch auch weitere Eingabegeräte, wie beispielsweise eine Computermaus o.ä. vorgesehen sein, auf deren Darstellung jedoch aus Gründen der Übersichtlichkeit verzichtet wurde. Das Computersystem 4 ist außerdem mittels ebenfalls nicht dargestellter Verbindungsmittel mit allen relevanten Vorrichtungskomponenten verbunden und durch entsprechende Systemkomponenten in der Lage, diese zu steuern bzw. auszulesen.

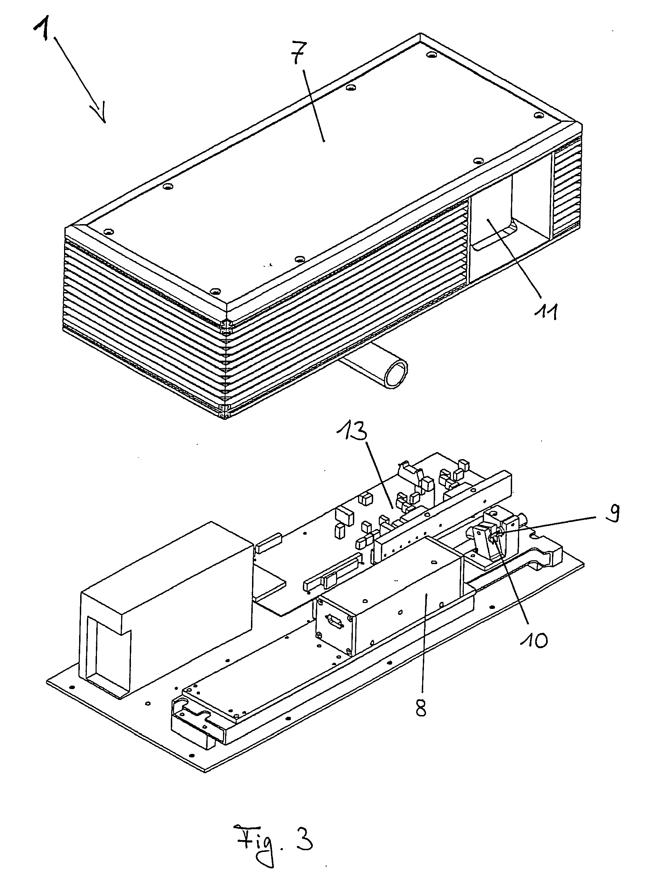

Der in Fig. 3 im Detail mit abgehobenem Gehäuse 7 dargestellte Laserprojektor 1 weist ein Lasersystem 8 (im folgenden auch Laser genannt) sowie ein aus zwei magnetisch auslenkbaren Spiegeln 9, 10 bestehendes Spiegelsystem auf, mit dem ein von dem Laser 8 ausgesandter Laserstrahl durch die Austrittsöffnung 11 des Gehäuses 7 des Laserprojektors 1 auf die dem Laserprojektor 1 zugewandte Oberfläche eines Gegenstands 12 gerichtet werden kann. Mittels einer entsprechenden Elektronik 13 des Laserprojektors 1 kann einerseits eine bestimmte Spiegelstellung für beide Spiegel 9, 10 des Spiegelsystems vorgegeben werden und andererseits die momentane Position der beiden Spiegel 9, 10 ausgelesen werden, woraus der Richtungsvektor des aus dem Laserprojektor 1 austretenden Laserstrahls bestimmbar ist. Der Laserprojektor weist eine theoretische Winkelauflösung von 80°/2^16. Nachdem derartige Laserprojektoren als solches bekannt sind, kann auf eine detailliertere Erläuterung verzichtet werden.

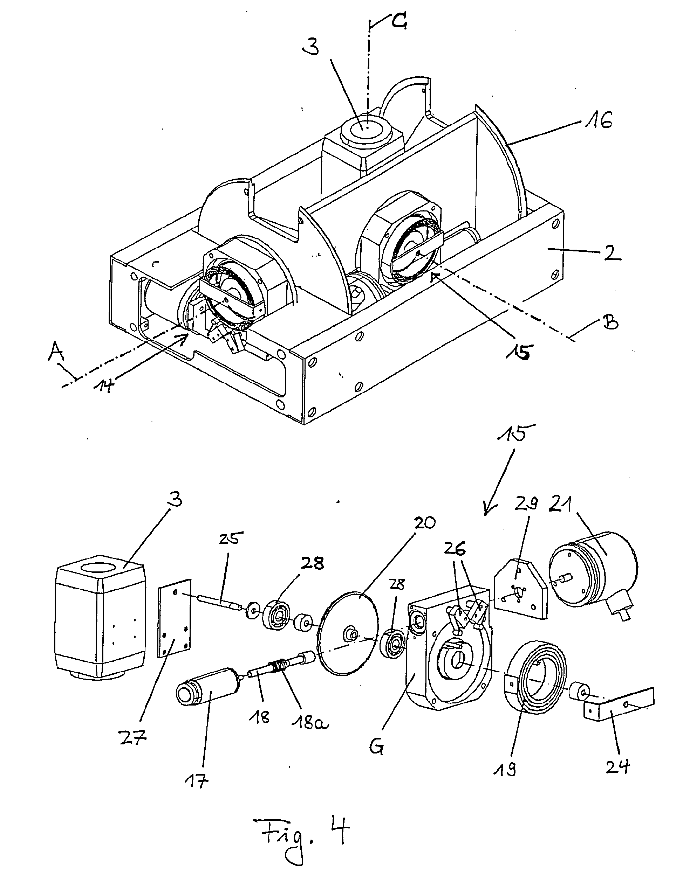

Fig. 4 zeigt in einer ersten Darstellung (oben) die Halterung 2, in der die CCD-Kamera 3 und die beiden zugehörigen Antriebseinheiten 14, 15 angeordnet sind. Dabei ist die mit einem variablen optischen Zoom (Weitwinkel bis 20-fache Vergrößerung) ausgestattete CCD-Kamera 3 zusammen mit der zweiten Antriebseinheit 15 in einer innerhalb der Halterung 2 drehbar gelagerten Trommel 16 angeordnet. Die Trommel 16 kann mit Hilfe der ersten Antriebseinheit 14 um eine erste Achse A über einem gesamten Winkelbereich von 100° (von -50° bis +50° relativ zur dargestellten Position) verdreht werden. Die CCD-Kamera 3 ist dabei innerhalb der drehbaren Trommel 16 um eine zweite, relativ zur ersten Achse A um 90° verdrehte Achse B mittels der zweiten Antriebseinheit 15 dreh- bzw. verschwenkbar gelagert, wobei auch hier wiederum ein maximaler Schwenkbereich von 100° (von -50° bis +50° relativ zur dargestellten Position) möglich ist. Die beiden Antriebseinheiten 14, 15 sind nahezu identisch ausgebildet. In einer zweiten Darstellung in Fig. 4 (unten) ist zu deren besseren Verständnis die Antriebseinheit 15 für die CCD-Kamera 3 detaillierter in einer Explosionszeichnung gezeigt. Die Antriebseinheiten 15 weist demnach einen an einem Getriebeblock G angeflanschten Motor 17 und ein Schnekkengetriebe mit einer Untersetzung von 100:1 auf, das jeweils eine von dem Motor 17 angetriebene Schneckenwelle 18 sowie ein mittels einer Spiralfeder 19 einseitig gegen die Schnecke 18a vorgespanntes Schneckenrad 20 umfaßt. Um diese Vorspannung zu erzielen ist die Spiralfeder 19 an ihrem radial inneren Ende fest mit dem Getriebeblock G verbunden und an ihrem äußeren Ende fest mit einem Bügel 24 verbunden, der wiederum über die Achsstange 25 mit dem Schneckenrad 20 verbunden ist. Der Getriebeblock G weist außerdem zwei als Anschlag für den Bügel 24 dienende Endschalter 26 auf, mit denen der maximal mögliche Schwenkbereich der CCD-Kamera 3 vorgebbar ist. Die CCD-Kamera 3 ist mittels einer Montageplatte 27 mit der Achsstange 25 der Antriebseinheit 15 verbunden. Zwei Kugellager 28 sorgen zudem für eine exakte beidseitige Führung des Schnekkenrads 20. Darüber hinaus kann die aktuelle Stellung der Schneckenwelle 18 mittels eines Drehgebers 21, der mit einer weiteren Montageplatte 29 an dem Getriebeblock G befestigt ist, mit einer Auflösung von 5000 Schritten pro Umdrehung ausgelesen werden, wobei zur Bestimmung des Richtungsvektors der optischen Achse C der CCD-Kamera 3 jeweils die Anzahl der vollständigen Umdrehungen der Schneckenwelle 18 gegenüber einer Nullstellung und die aktuelle Winkelstellung der Schneckenwelle 18 herangezogen wird. Die zweite Antriebseinheit 14 ist nahezu identisch aufgebaut und mit einer entsprechenden Montageplatte mit der Trommel 16 verbunden.

Als Gegenstand 12, dessen Oberfläche mittels der erfindungsgemäßen Vorrichtung nach dem Ausführungsbeispiel des erfindungsgemäßen Verfahrens vermessen werden soll, ist in dem in Fig. 2 dargestellten Ausführungsbeispiel der Vorrichtung ein Tragstruktur für ein später darin einzusetzendes (nicht dargestelltes) Bauteil gezeigt. Dabei sei angenommen, daß von diesem Gegenstand 12 zwar die relativen Abstände zwischen den zur Kalibrierung des Systems geeigneten Referenzpunkten T1 bis T6 bekannt seien, die Geometrie der übrigen dem Laserprojektor 1 zugewandten Oberfläche hingegen nicht.

Die Vermessung der 3-dimensionalen Oberfläche des Gegenstands 12 mit der in den Fig. 2 bis 4 dargestellten erfindungsgemäßen Vorrichtung wird nun anhand einer Bestimmung der 3-dimensionalen Koordinaten zweier sich auf der Oberfläche des Gegenstands 12 befindender Punkte P1, P2 erläutert.

Dazu wird zunächst die CCD-Kamera 3 auf den Gegenstand 12 gerichtet und der Gegenstand 12 in einem Weitwinkelmodus der CCD-Kamera 3 abgebildet (Schritt A, siehe Fig. 1). Eine entsprechende Abbildung des Gegenstands 12 kann dabei zu Dokumentationszwecken in einem Speicher des Computersystems 4 gespeichert werden.

Dann wird der von dem Laserprojektor 1 erzeugte Laserstrahl L mit Hilfe des Computersystems 4 zunächst auf einen Punkt P1 und später auf einen Punkt P2 der Oberfläche des Gegenstands 12 gerichtet, wobei die Steuerung des Laserprojektors 1 hierzu vorteilhaft bei gleichzeitiger Beobachtung eines von der CCD-Kamera 3 erzeugten, auf dem Bildschirm 6 des Computersystems 4 dargestellten Echtzeit-Bildes eines Ausschnitts des Gegenstands 12 erfolgt.

Die den jeweiligen Punkten P1 bzw. P2 entsprechende Stellung des Spiegelsystems des Laserprojektors 1 kann dann im Sinne einer Auswahl der beiden Punkte P1 und P2 auf der Oberfläche des Gegenstands 12 im Computersystem abgespeichert werden (Schritt B, vgl. Fig. 1).

In den auf die Beendigung der Auswahl von Punkten P1, P2 auf der Oberfläche des Gegenstands 12 folgenden automatisierten Verfahrensschritten wird sodann zunächst der Laserstrahl L des Laserprojektors 1 auf den ersten zu vermessenden Punkt P1 gerichtet und dessen exakter Richtungsvektor vom Computersystem bestimmt (Schritt C, vgl. Fig. 1). Dann wird der Gegenstand 12 erneut mittels der CCD-Kamera 3 abgebildet, wobei nach Abschaltung des Lasers 8 eine nochmalige Aufnahme des Gegenstands 12 durch die CCD-Kamera 3 erfolgt. Aus dem von dem Computersystem mit Hilfe einer entsprechenden Software zu berechnenden Differenzbild kann dann, ebenfalls automatisch, direkt die Position des von dem Laserstrahl L am Ort P1 erzeugten Lichtflecks auf dem von der CCD-Kamera 3 dargestellten Bildausschnitt ermittelt werden (Schritt D, vgl. Fig. 1).

Anschließend wird die optische Achse C der CCD-Kamera 3 mittels der beiden Antriebseinheiten 14, 15 auf das Zentrum des Lichtflecks verschwenkt und der CCD-Chip der CCD-Kamera 3 bei einer erhöhten Brennweite nochmals ausgelesen. Mit Hilfe einer entsprechenden Software wird durch das Computersystem überprüft, ob das Zentrum des Lichtflecks nun exakt auf dem Durchstoßpunkt der optischen Achse der CCD-Kamera 3 auf dem CCD-Chip abgebildet ist. Eine etwaig noch hiervon vorhandene Abweichung kann durch eine erneute Nachführung der optischen Achse C der CCD-Kamera 3 auf das Zentrum des nunmehr vergrößert dargestellten Lichtflecks beseitigt werden, wobei die Brennweite hierzu idealerweise derart eingestellt wird, daß eine optimale Abbildung des Lichtflecks auf dem CCD-Chip der CCD-Kamera 3 um das auf dem Durchstoßpunkt der optischen Achse C liegende Pixel des CCD-Chips erfolgt. Die optische Achse C der CCD-Kamera 3 wurde damit auf das Zentrum des Lichtflecks ausgerichtet (Schritt E, vgl. Fig. 1).

Nach Auslesen der Drehgeber 21 der beiden Antriebseinheiten 14, 15 der CCD-Kamera 3 wird sodann der Richtungsvektor der optischen Achse C der CCD-Kamera 3 bestimmt (Schritt F, vgl. Fig. 1).

Unter Zugrundelegung einfacher geometrischer Betrachtungen und eines bekannten bzw. zu bestimmenden Bezugskoordinatensystems 22, das z.B. in diesem Fall durch eine Vermessung der jeweiligen Richtungsvektoren zu den in ihren Relativkoordinaten bekannten Referenzpunkten T1 bis T6 (oder auch nur eines zur Kalibrierung und Bestimmung des Bezugskoordinatensystems 22 geeigneten Teils der Punkte) der Tragstruktur bestimmt werden kann und im vorliegenden Fall beispielhaft seinen Ursprung im Punkt T4 hat, sind somit die 3-dimensionalen Koordinaten des Punktes P1 innerhalb des Bezugskoordinatensystems 22 aus den Richtungsvektoren der optischen Achse C der Kamera sowie des Richtungsvektors des Laserstrahls L berechenbar (Schritt G, vgl. Fig. 1). Alternativ kann jedoch ebenso eine in ihren relevanten Ausdehnungen bekannte Eichform zur Eichung des Systems verwendet werden. Dabei kann eine Softwarekompensation zur Eliminierung von bekannten, durch eine Eichung festgestellten Meßabweichungen, beispielsweise einem Fehler eines Schneckengetriebes, z.B. in Form einer Unwucht an der Schnecke 18a der Schneckenwelle 18, vorgesehen sein.

Nach Berechnung der Koordinaten des Punktes P1 werden dann die Schritte C bis G nochmals zur Vermessung des zweiten zu vermessenden Punktes P2 durchgeführt (Schritt H, vgl. Fig. 1).

Selbiges Verfahren kann dann auf eine Vielzahl von Punkten auf der dem Laserprojektor 1 zugewandten Oberfläche des Gegenstands 12 durchgeführt werden, womit insbesondere wenn die Oberfläche entsprechend engmaschig abgerastert wird, ein rasterartiges 3-dimensionales Modell der dem Laserprojektor 1 zugewandten Oberfläche des Gegenstands 12 berechenbar ist.

Ein etwaig später auf die Oberfläche des Gegenstands 12 zu projizierendes Muster 23 (Schritt I, vgl. Fig. 1), das beispielsweise, um ein späteres Zusammenfügen mehrerer Bauteile zu erleichtern, die vorgesehene Lage eines in einer Aufnahme anzuordnenden Bauteils markiert, kann dann z.B. zunächst mit Hilfe des Computersystems 4 und einer entsprechenden Software in dem aus der Vermessung errechneten 3-dimensionalen Modell der Oberfläche des Gegenstands 12 eingezeichnet werden, woraus die für die Projektion notwendigen Richtungsvektoren des zur Projektion verwendeten Laserstrahls bestimmbar sind. Der Laserprojektor 1 kann dann direkt vom Computersystem 4 zur Projektion des vorgegebenen Musters 23 auf den Gegenstand 12 angesteuert werden.

Bei oder nach der Vermessung einzelner Punkte bzw. Bereiche der Oberfläche des Gegenstands kann mit Hilfe des Computersystems 4 die Orientierung eines auf der Oberfläche des Gegenstands 12 vorhandenen und bekannten Musters durch eine Auswertung der von der CCD-Kamera aufgenommenen Bilder erkannt (Schritt J, vgl. Fig. 1), mit einem vorgebbaren Sollwert verglichen (Schritt L₁, vgl. Fig. 1) und eine evtl. nicht dem Sollwert entsprechende Ausrichtung des Musters geeignet signalisiert werden (Schritt M₁, vgl. Fig. 1).

Gleiches gilt für die Bestimmung der Lage und Ausrichtung eines in seinen Abmessungen bekannten Gegenstands 12 (Schritt K, vgl. Fig. 1), dem Vergleich mit einem hierfür vorgesehenen Sollwert (Schritt L₂, vgl. Fig. 1) und eine evtl. Signalisierung einer nicht dem Sollwert entsprechenden Anordnung des betreffenden Gegenstands 12 (Schritt M₂, vgl. Fig. 1).

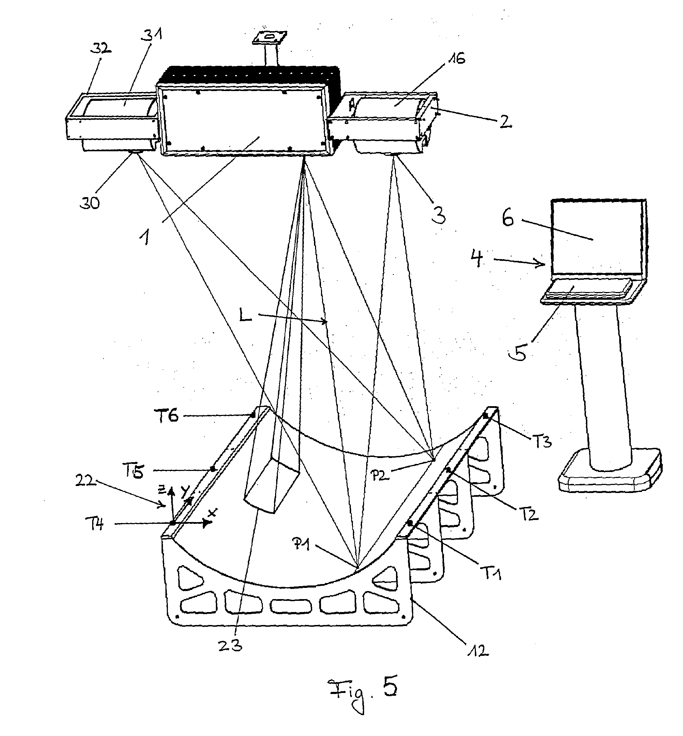

Ersichtlich gelten nahezu alle vorgenannten Ausführungen auch für das in Fig. 5 dargestellte zweite Ausführungsbeispiel einer erfindungsgemäßen Vorrichtung, welches sich zur Durchführung des zweiten erfindungsgemäßen Verfahrens gemäß Patentanspruch 2 eignet. Dieses Ausführungsbeispiel unterscheidet sich von dem in Fig. 2 dargestellten Ausführungsbeispiel im wesentlichen durch das Vorhandensein einer zweiten CCD-Kamera 30, die ebenso wie die erste CCD-Kamera 3 innerhalb einer Trommel 31 in einer Halterung 32 angeordnet und mit Hilfe zweier Antriebseinheiten in zwei Richtungen verschwenkbar aufgehängt ist.

Bei dem mit dieser Vorrichtung durchführbaren Verfahren wird dann zur Bestimmung der 3-dimensionalen Koordinaten eines Punktes P1, P2 ebenfalls mit Hilfe des Laserprojektors ein Lichtfleck an besagtem Punkt P1, P2 erzeugt, wobei dessen Koordinaten aus den beiden Richtungsvektoren der optischen Achsen beider exakt auf den Lichtfleck P1, P2 ausgerichteten CCD-Kameras 3, 30 berechnet werden. Insofern kann bei dem Laserprojektor auf eine Einrichtung zur Bestimmung des von ihm ausgesandten Laserstrahls verzichtet werden; es wird lediglich eine Einrichtung zur Steuerung des Laserstrahls benötigt. Das mit dieser Vorrichtung durchführbare Verfahren kann auch mit dem Flußdiagramm aus Fig. 1 erläutert werden, wobei in Abwandlung zur Beschreibung des ersten Ausführungsbeispiels die entsprechenden Verfahrensschritte nach Patentanspruch 2 durchzuführen sind.

## Patentansprüche

1. Verfahren zur 3-dimensionalen Vermessung der Oberfläche eines Gegenstands, umfassend die folgenden Schritte:
A1) 2-dimensionales Abbilden des Gegenstands mittels einer in zwei Richtungen verschwenkbaren CCD-Kamera, die eine optische Zoomfunktion aufweist, mit einer ersten Brennweite
B1) Auswählen mindestens eines zu vermessenden Punktes auf der Oberfläche des Gegenstands
C1) Bestimmen des Richtungsvektors eines mit seinem Zentrum auf einen zu vermessenden Punkt der Oberfläche des Gegenstands gerichteten Laserstrahls
D1) Erkennen des durch den Laserstrahl auf der Oberfläche des Gegenstands erzeugten Lichtflecks mittels der CCD-Kamera
E1) Ausrichten der optischen Achse der CCD-Kamera auf das Zentrum des auf der Oberfläche des Gegenstands erzeugten Lichtflecks bei einer zweiten, im Vergleich zur der unter Schritt A) verwendeten größeren Brennweite
F1) Bestimmen des Richtungsvektors der optischen Achse der CCD-Kamera
G1) Berechnen der innerhalb eines Bezugskoordinatensystems geltenden 3-dimensionalen Koordinaten des durch das Zentrum des Lichtflecks markierten Punktes auf der Oberfläche des Gegenstands aus den beiden Richtungsvektoren des Laserstrahls und der optischen Achse der CCD-Kamera unter Berücksichtigung der relativen Anordnung von CCD-Kamera und Laserprojektor
H1) Wiederholung der Schritte C1) bis G1) für alle unter Schritt B1) ausgewählten Punkte

2. Verfahren zur 3-dimensionalen Vermessung der Oberfläche eines Gegenstands, umfassend die folgenden Schritte:
A2) 2-dimensionales Abbilden des Gegenstands mittels zwei jeweils in zwei Richtungen verschwenkbaren CCD-Kameras, die beide eine optische Zoomfunktion aufweisen, bei jeweils einer ersten Brennweite
B2) Auswählen mindestens eines zu vermessenden Punktes auf der Oberfläche des Gegenstands
C2) Ausrichten eines Laserstrahls mit seinem Zentrum auf einen zu vermessenden Punkt der Oberfläche des Gegenstands
D2) Erkennen des durch den Laserstrahl auf der Oberfläche des Gegenstands erzeugten Lichtflecks mittels beider CCD-Kameras
E2) Ausrichten der optischen Achse beider CCD-Kameras auf das Zentrum des auf der Oberfläche des Gegenstands erzeugten Lichtflecks bei jeweils einer zweiten, im Vergleich zur der unter Schritt A2) verwendeten größeren Brennweite
F2) Bestimmen der Richtungsvektoren der optischen Achsen der beiden CCD-Kameras
G2) Berechnen der innerhalb eines Bezugskoordinatensystems geltenden 3-dimensionalen Koordinaten des durch das Zentrum des Lichtflecks markierten Punktes auf der Oberfläche des Gegenstands aus den beiden Richtungsvektoren der optischen Achsen der CCD-Kameras unter Berücksichtigung der relativen Anordnung der beiden CCD-Kameras
H2) Wiederholung der Schritte C2) bis G2) für alle unter Schritt B2) ausgewählten Punkte

3. Verfahren nach Anspruch 1 oder Anspruch 2, **dadurch gekennzeichnet,**
**daß** die in Schritt A1) oder A2) zu erzeugende(n) Abbildung(en) mit Hilfe eines Computersystems aus mehreren jeweils nur einen Teil des Gegenstands darstellenden Einzelaufnahmen der mindestens einen CCD-Kamera zusammengesetzt wird.

4. Verfahren nach Anspruch 1 oder Anspruch 2, **dadurch gekennzeichnet,**
**daß** die in Schritt B1) oder B2) beschriebene Auswahl der zu vermessenden Punkte durch Ausrichten des Laserstrahls des Laserprojektors auf den jeweiligen zu vermessenden Punkt der Oberfläche des Gegenstands erfolgt.

5. Verfahren nach Anspruch 1 oder Anspruch 2, **dadurch gekennzeichnet,**
**daß** die in Schritt B1) oder B2) beschriebene Auswahl automatisch durch ein Computersystem erfolgt.

6. Verfahren nach Anspruch 1 oder Anspruch 2, **dadurch gekennzeichnet,**
**daß** die in Schritt B1) oder B2) auszuwählenden Punkte ein automatisch erzeugtes Raster innerhalb eines vom Nutzer auswählbaren Bereichs der Oberfläche des Gegenstands bilden.

7. Verfahren nach Anspruch 1 oder Anspruch 2, **dadurch gekennzeichnet,**
**daß** die in Schritt D1) oder D2) erfolgende automatische Erkennung des Lichtflecks auf der Oberfläche des Gegenstands mittels eines Differenzbildes erfolgt, das aus zwei, einmal mit eingeschaltetem Laserstrahl und einmal mit ausgeschaltetem Laserstrahl aufgenommenen Einzelaufnahmen der mindestens einen CCD-Kamera berechnet wird.

8. Verfahren nach Anspruch 1 oder Anspruch 2, **dadurch gekennzeichnet,**
**daß** bei der Bestimmung des Richtungsvektors des Laserstrahls nach Schritt C1), bei der Bestimmung des Richtungsvektors der optischen Achse der mindestens einen CCD-Kamera nach Schritt F1) oder F2) und/oder bei der Berechnung der Koordinaten eines Punkts auf der Oberfläche des Gegenstands nach Schritt G1) oder G2) eine Softwarekompensation zur Eliminierung von bekannten Meßabweichungen vorgesehen ist.

9. Verfahren nach Anspruch 1 oder Anspruch 2, **dadurch gekennzeichnet,**
**daß** nach dem 3-dimensionalen Vermessen der ausgewählten Punkte der Oberfläche des Gegenstands mit dem Laserprojektor ein vorgebbares Muster auf die Oberfläche des Gegenstands projiziert wird.

10. Verfahren nach Anspruch 1 oder Anspruch 2, **dadurch gekennzeichnet,**
**daß** aus einer von einer CCD-Kamera erzeugten Abbildung des Gegenstands die Orientierung eines bekannten Musters auf der Oberfläche des Gegenstands berechnet wird.

11. Verfahren nach Anspruch 1 oder Anspruch 2, **dadurch gekennzeichnet,**
**daß** aus den Koordinaten der vermessenen Punkte die Anordnung eines in seinen Abmessungen bekannten Gegenstands berechnet wird.

12. Verfahren nach Anspruch 10 oder Anspruch 11,
**dadurch gekennzeichnet,**
**daß** die berechnete Anordnung des Gegenstands oder Ausrichtung des Musters auf der Oberfläche des Gegenstands mit einem vorgebbaren Sollwert verglichen wird.

13. Verfahren nach Anspruch 12, **dadurch gekennzeichnet, daß** eine nicht dem Sollwert entsprechende Ausrichtung des Gegenstands oder des Musters auf der Oberfläche des Gegenstands durch ein elektrisches, akustisches und/oder optisches Signal signalisiert wird.

14. Vorrichtung, geeignet zur Durchführung eines Verfahrens zur 3-dimensionalen Vermessung der Oberfläche eines Gegenstands nach Anspruch 1 oder Anspruch 2, umfassend eine Tragstruktur für den Gegenstand, einen Laserprojektor, mindestens eine CCD-Kamera und ein mit den relevanten Vorrichtungskomponenten verbundenes Computersystem zur Erfassung und Auswertung der gewonnenen Daten, wobei der Laserprojektor über eine Einrichtung zur Bestimmung und/oder Steuerung des Richtungsvektors eines von ihm auf die Oberfläche des Gegenstands gerichteten Laserstrahls verfügt und die mindestens eine CCD-Kamera mit einer variabel einstellbaren optischen Zoomfunktion ausgestattet ist, mittels zweier Antriebseinheiten in zwei verschiedenen Richtungen verschwenkbar auf die Oberfläche des Gegenstands ausrichtbar ist und eine Einrichtung zur Bestimmung des Richtungsvektors ihrer optischen Achse aufweist.

15. Vorrichtung nach Anspruch 14, **dadurch gekennzeichnet,**
**daß** die beiden Antriebseinheiten der mindestens einen CCD-Kamera jeweils ein Schneckengetriebe und einen mit der Schneckenwelle verbundenen Drehgeber aufweisen.

16. Vorrichtung nach Anspruch 15, **dadurch gekennzeichnet,**
**daß** beide Schneckengetriebe spielfrei vorgespannt sind.

17. Vorrichtung nach Anspruch 16, **dadurch gekennzeichnet,**
**daß** die Vorspannung der Schneckengetriebe mittels einer Spiralfeder aufgebracht wird.

18. Vorrichtung nach Anspruch 14, **dadurch gekennzeichnet,**
**daß** die Winkelauflösung der Einrichtung zur Bestimmung des Richtungsvektors der optischen Achse der mindestens einen CCD-Kamera besser als 10 Winkelsekunden, vorteilhaft besser als 5 Winkelsekunden, nochmals vorteilhaft besser als 3 Winkelsekunden ist.

19. Vorrichtung nach Anspruch 14, **dadurch gekennzeichnet,**
**daß** die maximale Brennweite der optischen Zoomfunktion der mindestens einen CCD-Kamera mindestens eine 10-fache, vorteilhaft eine mindestens 15-fache, nochmals vorteilhaft eine 20-fache Vergrößerung gestattet.

20. Vorrichtung nach Anspruch 14, **dadurch gekennzeichnet,**
**daß** der maximal mögliche Schwenkbereich beider Antriebseinheiten der mindestens einen CCD-Kamera von Anschlag zu Anschlag einen Winkelbereich von mindestens 80°, vorteilhaft 100° einschließt.

21. Vorrichtung nach Anspruch 14, **dadurch gekennzeichnet,**
**daß** der Laserprojektor zwei drehbare, magnetisch ansteuerbare Spiegel umfaßt.
